# EUROPÄISCHE PATENTSCHRIFT

(11) **EP 3 791 086 B1**
(45) Veröffentlichungstag und Bekanntmachung des Hinweises auf die Patenterteilung: **25.06.2025**
(21) Anmeldenummer: 19722122.9
(22) Anmeldetag: 06.05.2019
(51) Int. Cl.: F16F 1/04, H01H 51/06, H01H 50/64

(54) **SCHALTVORRICHTUNG**
SWITCH DEVICE
DISPOSITIF DE COMMUTATION

(30) Priorität: 07.05.2018 DE 102018110919
(43) Veröffentlichungstag der Anmeldung: 17.03.2021
(73) Patentinhaber: TDK Electronics AG, 81671 München (DE)
(72) Erfinder: HOFFMANN, Robert, 12163 Berlin (DE)
(74) Vertreter: Epping - Hermann - Fischer
(86) Internationale Anmeldenummer: PCT/EP2019/061567
(87) Internationale Veröffentlichungsnummer: WO 2019/215093

(56) Entgegenhaltungen:
- DE-A1- 102015 121 033
- DE-A1- 19 948 446
- DE-A1- 3 537 598
- DE-B1- 1 590 688
- DE-T2- 69 505 818
- DE-T2- 69 714 895
- DE-U1- 20 320 532
- DE-U1- 202018 101 604
- GB-A- 206 316
- US-A- 210 027
- US-B1- 6 193 225

## Beschreibung

Es wird eine Schaltvorrichtung angegeben.

Die Schaltvorrichtung ist insbesondere als ein durch elektrisch leitenden Strom betreibbarer, elektromagnetisch wirkender, fernbetätigter Schalter ausgebildet. Die Schaltvorrichtung kann über einen Steuerstromkreis aktiviert werden und kann einen Laststromkreis schalten. Insbesondere kann die Schaltvorrichtung als Relais oder als Schütz, insbesondere als Leistungsschütz, ausgebildet sein. Besonders bevorzugt kann die Schaltvorrichtung als gasgefüllter Leistungsschütz ausgebildet sein.

Eine mögliche Anwendung von derartigen Schaltvorrichtungen, insbesondere von Leistungsschützen, ist das Öffnen und Trennen von Batteriestromkreisen, beispielsweise in Kraftfahrzeugen wie etwa elektrisch oder teilelektrisch betriebenen Kraftfahrzeugen. Diese können beispielsweise rein batteriebetriebene Fahrzeuge (BEV: "Battery Electric Vehicle"), über eine Steckdose oder Ladestation aufladbare Hybrid-Elektrofahrzeuge (PHEV: "Plug-in Hybrid Electric Vehicle") und Hybrid-Elektrofahrzeuge (HEV: "Hybrid Electric Vehicle") sein. Dabei werden in der Regel sowohl der Plusals auch der Minuskontakt der Batterie mit Hilfe eines Leistungsschützes getrennt. Diese Auftrennung erfolgt im Regelbetrieb beispielsweise im Ruhezustand des Fahrzeuges sowie auch im Falle einer Störung wie etwa einem Unfall oder ähnlichem. Dabei ist es die Hauptaufgabe des Leistungsschützes, das Fahrzeug spannungsfrei zu schalten und den Stromfluss zu unterbrechen.

Ein Kernmerkmal solcher Schütze ist die Fähigkeit, die anliegende Last in allen Einbaulagen schnell und sicher zu löschen, das heißt auch bei einem Einbau über Kopf, bei dem die Erdanziehungskraft nicht in Öffnungsrichtung wirkt. Zusätzlich ist eine schnelle Öffnung der Kontakte wünschenswert, um die Ausbildung von Schaltlichtbögen nicht weiter zu begünstigen.

Um die Rückstellbewegung eines Leistungsschützes zu bewirken, werden Rückstellfedern eingesetzt, die während des Anzugsvorganges komprimiert werden, während des Betriebes eine Kraft speichern und diese dann im Abschaltmoment dazu nutzen, die Kontakte wieder auseinander zu drücken. Üblicherweise werden dazu lineare Federn verwendet, also Federn, deren Federkonstante und Gegenkraft linear über den gesamten Federweg sind. Dies hat den Nachteil, dass von Beginn des Anzugsvorganges an sehr viel Energie benötigt wird, um den Schütz zu aktivieren und um überhaupt die Gegenkraft der Rückstellfeder zu überwinden.

In der Druckschrift DE 10 2015 121 033 ist beschrieben, zwei abhängige Federn als Rückstellfedermechanismus zu verwenden. Dies hat den Vorteil, dass zu Beginn des Schaltvorganges dem beweglichen System nur eine geringe Gegenkraft in Form einer ersten, leichteren Feder entgegengesetzt wird. Nach einem bestimmten Weg wird die erste, leichtere Feder blockiert und eine zweite, härte Feder komprimiert. Letzteres ist nun einfacher möglich, da das bewegliche System bereits in Bewegung ist und so die Gegenkraft der härteren Feder einfacher überwinden kann. Im Endzustand kann trotzdem die gleiche Gegenkraft für den Abschaltvorgang gespeichert werden, obwohl für den Einschaltvorgang weniger Energie aufgewendet werden musste. Jedoch müssen hierfür zusätzliche einzelne Komponenten verwendet werden, nämlich unter anderem neben den zwei Federn ein Separator und ein Anschlag für die erste Feder.

Die Druckschrift DE 1 590 688 B1 beschreibt eine Relaisvorrichtung, die eine Kontaktplatte an einem Anker aufweist, mittels derer Kontakte elektrisch leitend verbunden werden können. Der Anker kann mittels einer Spule in eine Richtung entgegen der Schwerkraftrichtung bewegt werden. Fließt kein Strom mehr durch die Spule, zieht die Schwerkraft den Anker wieder nach unten. Durch eine Feder kann eine Minimierung des Kontaktrückpralls beim Anschlag der Kontaktplatte gegen die Kontakteerreicht werden.

Die Druckschrift DE 20 2018 101 604 U1 beschreibt ein Tastenmodul für eine Taste einer Tastatur.

Die Druckschrift DE 35 37 598 A1 beschreibt einen elektromagnetischen Schalter.

Die Druckschrift DE 697 14 895 T2 beschreibt eine gekapselte Kontaktanordnung mit justierbarem Kontaktabstand.

Die Druckschrift DE 20 320 532 U1 beschreibt ein Schaltkontaktsystem für einen elektrischen Schalter.

Zumindest eine Aufgabe von bestimmten Ausführungsformen ist es, eine Schaltvorrichtung anzugeben, besonders bevorzugt eine Schaltvorrichtung, bei der beschriebene Nachteile vermindert oder sogar verhindert werden können.

Diese Aufgabe wird durch einen Gegenstand gemäß dem unabhängigen Patentanspruch gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Gemäß einer Ausführungsform weist eine Schaltvorrichtung zumindest einen feststehenden Kontakt und zumindest einen beweglichen Kontakt auf. Der zumindest eine feststehende Kontakt und der zumindest eine bewegliche Kontakt sind dazu vorgesehen und eingerichtet, einen an die Schaltvorrichtung anschließbaren Laststromkreis ein- und auszuschalten. Der bewegliche Kontakt ist in der Schaltvorrichtung entsprechend derart zwischen einem nicht-durchschaltenden Zustand und einem durchschaltenden Zustand der Schaltvorrichtung bewegbar, dass der bewegliche Kontakt im nicht-durchschaltenden Zustand der Schaltvorrichtung vom zumindest einen feststehenden Kontakt beabstandet und damit galvanisch getrennt ist und im durchschaltenden Zustand einen mechanischen Kontakt zum zumindest einen feststehenden Kontakt aufweist und damit galvanisch mit dem zumindest einen feststehenden Kontakt verbunden ist. Besonders bevorzugt weist die Schaltvorrichtung zumindest zwei feststehende Kontakte auf, die voneinander getrennt in der Schaltvorrichtung angeordnet sind und die auf diese Weise je nach Zustand des beweglichen Kontakts durch den beweglichen Kontakt elektrisch leitend miteinander verbunden oder elektrisch voneinander getrennt sein können.

Hier und im Folgenden werden der nicht-durchschaltende Zustand als erster Schaltzustand und der durchschaltende Zustand als zweiter Schaltzustand der Schaltvorrichtung bezeichnet. Beim Übergang vom ersten zum zweiten Schaltzustand wird zumindest ein Zwischenzustand durchlaufen. Beim umgekehrten Übergang vom zweiten Schaltzustand zum ersten Schaltzustand kann derselbe Zwischenzustand durchlaufen werden. Es kann auch möglich sein, dass ein anderer Zwischenzustand durchlaufen wird.

Gemäß einer weiteren Ausführungsform weist die Schaltvorrichtung ein Gehäuse auf, in dem der bewegliche Kontakt und der zumindest eine feststehende Kontakt oder die zumindest zwei feststehenden Kontakte angeordnet sind. Der bewegliche Kontakt kann insbesondere vollständig im Gehäuse angeordnet sein. Dass ein feststehender Kontakt im Gehäuse angeordnet ist, kann insbesondere bedeuten, dass zumindest der Kontaktbereich des feststehenden Kontakts, der im zweiten Schaltzustand, also im durchschaltenden Zustand, in mechanischem Kontakt zum beweglichen Kontakt steht, innerhalb des Gehäuses angeordnet ist. Zum Anschluss einer Zuleitung eines durch die Schaltvorrichtung zu schaltenden Stromkreises kann ein im Gehäuse angeordneter feststehender Kontakt von außen, also von außerhalb des Gehäuses, elektrisch kontaktierbar sein. Hierzu kann ein im Gehäuse angeordneter feststehender Kontakt mit einem Teil aus dem Gehäuse herausragen und außerhalb des Gehäuses eine Anschlussmöglichkeit für eine Zuleitung aufweisen.

Gemäß einer weiteren Ausführungsform sind die Kontakte in einer Gasatmosphäre im Gehäuse angeordnet. Das kann insbesondere bedeuten, dass der bewegliche Kontakt vollständig in der Gasatmosphäre im Gehäuse angeordnet ist und dass weiterhin zumindest Teile des oder der feststehenden Kontakte, etwa der oder die Kontaktbereiche des oder der feststehenden Kontakte, in der Gasatmosphäre im Gehäuse angeordnet sind. Die Schaltvorrichtung kann entsprechend besonders bevorzugt eine gasgefüllte Schaltvorrichtung wie etwa ein gasgefülltes Schütz sein.

Gemäß einer weiteren Ausführungsform sind die Kontakte, das bedeutet der bewegliche Kontakt vollständig sowie zumindest Teile des oder der feststehenden Kontakte, in einer Schaltkammer innerhalb des Gehäuses angeordnet, in der sich das Gas, also zumindest ein Teil der Gasatmosphäre, befindet. Das Gas kann bevorzugt einen Anteil von zumindest 50% H₂ aufweisen. Zusätzlich zum Wasserstoff kann das Gas ein inertes Gas aufweisen, besonders bevorzugt N₂ und/oder eines oder mehrere Edelgase.

Gemäß einer weiteren Ausführungsform ist der bewegliche Kontakt mittels eines Magnetankers bewegbar. Der Magnetanker kann hierzu insbesondere eine Achse aufweisen, die an einem Ende mit dem beweglichen Kontakt derart verbunden ist, dass der bewegliche Kontakt vermittels der Achse bewegbar ist, also bei einer Bewegung der Achse durch diese bewegt wird. Die Achse kann insbesondere durch eine Öffnung in der Schaltkammer in die Schaltkammer hineinragen. Der Magnetanker kann durch einen magnetischen Kreis bewegbar sein. Insbesondere kann der magnetische Kreis ein Joch aufweisen, das eine Öffnung aufweist, durch die die Achse des Magnetankers hindurch ragt. Die Achse kann bevorzugt Edelstahl aufweisen oder daraus sein. Das Joch kann bevorzugt Reineisen oder eine niedrig dotierte Eisenlegierung aufweisen oder daraus sein.

Der bewegliche Kontakt kann insbesondere mittels des Magnetankers vom ersten Schaltzustand in den zweiten Schaltzustand bewegbar sein. Mit anderen Worten kann der Übergang vom ersten zum zweiten Schaltzustand dadurch bewirkt werden, dass der Magnetanker durch eine durch den magnetischen Kreis hervorgerufene Magnetkraft bewegt wird. Der Magnetanker weist weiterhin eine Feder auf, die dazu eingerichtet ist, beim Übergang vom ersten Schaltzustand zum zweiten Schaltzustand Energie zu speichern, die den beweglichen Kontakt vom zweiten Schaltzustand in den ersten Schaltzustand zurückstellen kann. Dies kann insbesondere bedeuten, dass der Magnetanker und damit der bewegliche Kontakt durch die Feder bei Abwesenheit der durch den magnetischen Kreis hervorgerufenen Magnetkraft zurückbewegt werden. Die Feder kann insbesondere durch die Bewegung des Magnetankers vom ersten in den zweiten Schaltzustand, die durch die durch den magnetischen Kreis hervorgerufene Magnetkraft bewirkt wird, komprimiert werden.

Gemäß der Erfindung weist die Feder einen ersten Federbereich mit einer ersten Federkonstanten und einen zweiten Federbereich mit einer zweiten Federkonstanten auf, die größer als die erste Federkonstante ist. Die Feder weist somit zwei Bereiche auf, die sich durch eine unterschiedliche Federhärte und entsprechend durch ein unterschiedliches Ansprechverhalten auf eine äußere Kraft auszeichnen. Die Feder kann somit besonders bevorzugt als nichtlineare Feder ausgebildet sein. Durch die kleinere erste Federkonstante im Vergleich zur zweiten Federkonstanten wird zumindest am Anfang des durch den magnetischen Kreis bewirkten Schaltvorgangs der erste Federbereich stärker komprimiert als der zweite Federbereich. Erfindungsgemäß ist die Feder derart ausgebildet, dass beim Übergang vom ersten Schaltzustand in den Zwischenzustand ausschließlich der erste Federbereich komprimiert wird.

Der Zwischenzustand kann bevorzugt einem Zustand der Feder entsprechen, ab dem bei einer weiteren Komprimierung der Feder der erste Federbereich nicht mehr oder zumindest nicht mehr wesentlich komprimiert wird. Dies kann beispielsweise dadurch erreicht werden, dass die Feder derart ausgebildet ist, dass sich die Federwicklungen im ersten Federbereich ab Erreichen des Zwischenzustands bei einer weiteren Komprimierung der Feder blockieren. Entsprechend kann die Feder derart ausgebildet sein, dass der erste Federbereich somit während eines Übergangs vom Zwischenzustand in den zweiten Schaltzustand blockiert ist. Beispielsweise kann der erste Federbereich ab dem Zwischenzustand vollständig komprimiert sein, so dass die Wicklungen des ersten Federbereichs ab Erreichen des Zwischenzustands aneinander anliegen.

Die Feder kann weiterhin derart ausgebildet sein, dass bei einem Übergang vom Zwischenzustand in den zweiten Schaltzustand der zweite Federbereich komprimiert wird. Insbesondere kann hierbei ausschließlich der zweite Federbereich komprimiert werden. Dies kann besonders bevorzugt der Fall sein, wenn der erste Federbereich wie vorab beschrieben ab Erreichen des Zwischenzustands bei einer weiteren Komprimierung der Feder blockiert ist. Der erste Federbereich wirkt dann wie ein Anschlag für den zweiten Federbereich.

Durch die unterschiedlichen Federkonstanten sprechen die unterschiedlichen Federbereiche somit bevorzugt nacheinander auf eine äußere Kraft, die durch die Schaltbewegung des Magnetankers hervorgerufen wird und die die Feder komprimiert, an. Dadurch kann es möglich sein, dass beim Anzug des Magnetankers, also beim Übergang vom ersten Schaltzustand zum zweiten Schaltzustand, zuerst eine erste Kraft überwunden werden muss, die durch den ersten Federbereich bestimmt ist, und erst später eine zweite Kraft überwunden werden muss, die durch den zweiten Federbereich bestimmt ist. Da die erste Kraft kleiner als die zweite Kraft ist, muss somit zu Beginn des Schaltvorgangs nur eine geringe Gegenkraft überwunden werden. Erst wenn der Magnetanker schon in Bewegung und der beschriebene Zwischenzustand erreicht ist, muss eine höhere Gegenkraft überwunden werden. Zu diesem Zeitpunkt kann es aber mit Vorteil möglich sein, dass das bewegliche System, also im Wesentlichen der Magnetanker mit dem beweglichen Kontakt, bereits genügend Geschwindigkeit aufgenommen hat, um diesen höheren Widerstand zu überwinden.

Wird die durch den magnetischen Kreis hervorgerufene Magnetkraft abgeschaltet, kann durch den zweiten Federbereich eine ausreichend hohe Rückstellkraft hervorgerufen werden, die das bewegliche System wieder in Richtung des ersten Schaltzustands zurückbewegt. Hierbei kann die Ausdehnung der Feder umgekehrt zur vorher beschriebenen Komprimierung verlaufen. Es kann insbesondere möglich sein, dass durch die beschriebene Feder eine niedrigere Anzugsenergie bei einer gleichen oder sogar einer höheren Rückstellkraft erzielt werden kann als bei der Verwendung herkömmlicher linearer Federn.

Gemäß einer weiteren Ausführungsform weisen der erste und zweite Federbereich unterschiedliche Wicklungen auf, also beispielsweise insbesondere unterschiedlich enge Wicklungen. Hierdurch können bei der Verwendung desselben Materials für die gesamte Feder, beispielsweise herkömmlichen Federstahl, die unterschiedlichen Federbereiche hergestellt werden. Hierbei kann es je nach gewünschten Federkonstanten und Federwegen möglich sein, dass der erste und zweite Federbereich beispielsweise eine unterschiedliche Wicklungszahl aufweisen. Weiterhin kann es auch möglich sein, dass der erste und zweite Federbereich eine gleiche Wicklungszahl aufweisen. Weiterhin können der erste und zweite Federbereich unterschiedliche Federwege aufweisen. Alternativ hierzu sind auch gleiche Federwege möglich.

Der Übergang vom ersten zum zweiten Federbereich kann abrupt sein. Das kann bedeuten, dass die Feder im ersten Federbereich einen gleichbleibenden ersten Wicklungsabstand und im zweiten Federbereich einen gleichbleibenden zweiten, vom ersten Wicklungsabstand verschiedenen Wicklungsabstand aufweist und die beiden Federbereiche unmittelbar aneinander angrenzen. Alternativ hierzu kann es auch möglich sein, dass der Übergang vom ersten zum zweiten Federbereich kontinuierlich ist. Hierbei kann die Feder im ersten Federbereich einen gleichbleibenden ersten Wicklungsabstand und im zweiten Federbereich einen gleichbleibenden zweiten, vom ersten Wicklungsabstand verschiedenen Wicklungsabstand aufweisen, wobei zwischen dem ersten und zweiten Federbereich ein Übergangsbereich vorhanden ist, in dem sich der Wicklungsabstand über mehrere Wicklungen vom ersten zum zweiten Wicklungsabstand ändert.

Weiterhin kann es auch möglich sein, dass die Feder zumindest einen dritten Federbereich mit einer dritten Federkonstanten aufweist, die größer als die zweite Federkonstante ist. Für die Ausbildung und das Verhalten des dritten Federbereichs im Verhältnis zum zweiten Federbereich kann dasselbe gelten wie vorab für den ersten und zweiten Federbereich beschrieben. Der zweite Federbereich kann beispielsweise zwischen dem ersten Federbereich und dem dritten Federbereich angeordnet sein. Weiterhin kann es auch möglich sein, dass der erste Federbereich zwischen dem zweiten und dritten Federbereich angeordnet ist. Darüber hinaus können auch mehr als drei Federbereiche mit unterschiedlichen Federkonstanten vorhanden sein.

Weitere Vorteile, vorteilhafte Ausführungsformen und Weiterbildungen ergeben sich aus den im Folgenden in Verbindung mit den Figuren beschriebenen Ausführungsbeispielen.

Es zeigen:
Figuren 1A und 1B schematische Darstellungen eines Beispiels für eine Schaltvorrichtung,
Figur 2 eine schematische Darstellung eines Teils einer Schaltvorrichtung gemäß einem Ausführungsbeispiel,
Figuren 3A bis 3C schematische Darstellungen unterschiedlicher Zustände einer Feder einer Schaltvorrichtung gemäß einem weiteren Ausführungsbeispiel,
Figuren 4A bis 4C schematische Darstellungen von Teilen einer Schaltvorrichtung gemäß einem weiteren Ausführungsbeispiel und
Figuren 5A und 5B schematische Darstellungen von Federn einer Schaltvorrichtung gemäß weiteren Ausführungsbeispielen.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

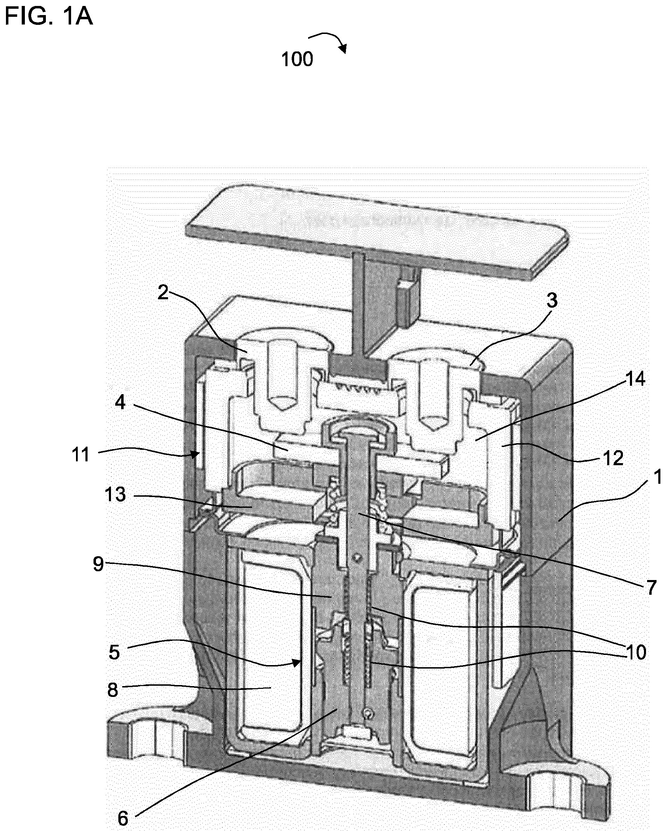

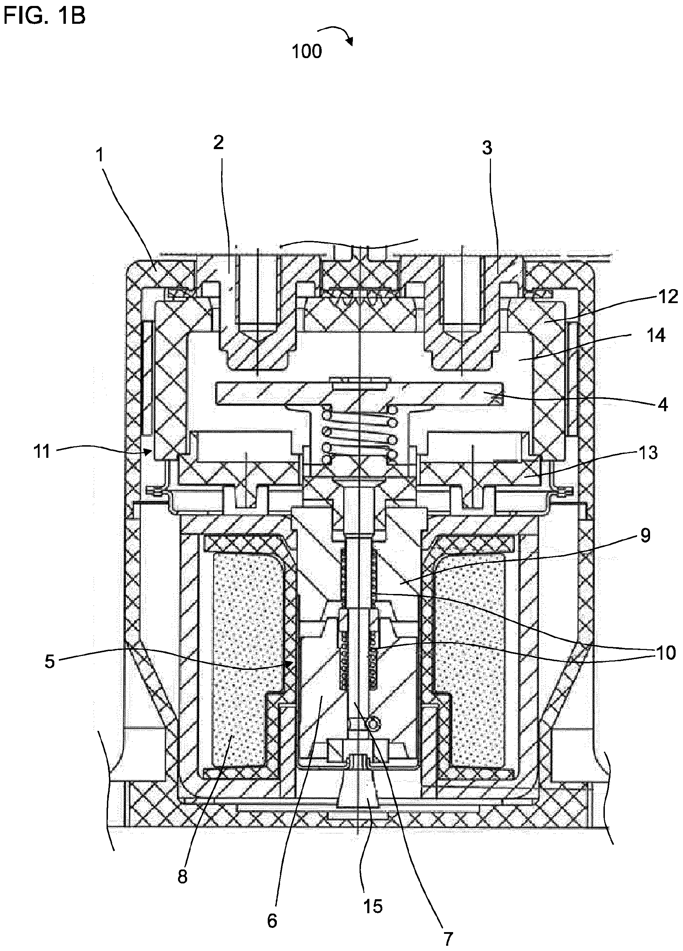

In den Figuren 1A und 1B ist ein Beispiel für eine Schaltvorrichtung 100 gezeigt, die beispielsweise zum Schalten starker elektrischer Ströme und/oder hoher elektrischer Spannungen eingesetzt werden kann und die ein Relais oder Schütz, insbesondere ein Leistungsschütz, sein kann. In Figur 1A ist eine dreidimensionale Schnittdarstellung gezeigt, während in Figur 1B eine zweidimensionale Schnittdarstellung dargestellt ist. Die nachfolgende Beschreibung bezieht sich gleichermaßen auf die Figuren 1A und 1B. Die gezeigten Geometrien sind nur exemplarisch und nicht beschränkend zu verstehen und können auch alternativ ausgebildet sein.

Die Schaltvorrichtung 100 weist in einem Gehäuse 1 zwei feststehende Kontakte 2, 3 und einen beweglichen Kontakt 4 auf. Der bewegliche Kontakt 4 ist als Kontaktplatte ausgebildet. Die feststehenden Kontakte 2, 3 bilden zusammen mit dem beweglichen Kontakt 4 die Schaltkontakte. Das Gehäuse 1 dient vornehmlich als Berührschutz für die im Inneren angeordneten Komponenten und weist einen Kunststoff auf oder ist daraus, beispielsweise Polybutylenterephthalat (PBT) oder Glas-gefülltes PBT. Die Kontakte 2, 3, 4 können beispielsweise mit oder aus Cu, einer Cu-Legierung oder einer Mischung von Kupfer mit zumindest einem weiteren Metall, beispielsweise Wo, Ni und/oder Cr, sein.

In den Figuren 1A und 1B ist die Schaltvorrichtung 100 in einem ersten Schaltzustand gezeigt, der einem Ruhezustand entspricht, in dem der bewegliche Kontakt 4 von den feststehenden Kontakten 2, 3 beabstandet ist, so dass die Kontakte 2, 3, 4 galvanisch voneinander getrennt sind. Die gezeigte Ausführung der Schaltkontakte und insbesondere deren Geometrie sind rein beispielhaft und nicht beschränkend zu verstehen. Alternativ können die Schaltkontakte auch anders ausgebildet sein. Beispielsweise kann es möglich sein, dass nur einer der Schaltkontakte feststehend ausgebildet ist.

Die Schaltvorrichtung 100 weist einen beweglichen Magnetanker 5 auf, der im Wesentlichen die Schaltbewegung vollzieht. Der Magnetanker 5 weist einen magnetischen Kern 6 auf, beispielsweise mit oder aus einem ferromagnetischen Material. Weiterhin weist der Magnetanker 5 eine Achse 7 auf, die durch den magnetischen Kern 6 geführt ist und an einem Achsenende fest mit dem magnetischen Kern 6 verbunden ist. Am anderen, dem magnetischen Kern 6 gegenüberliegenden Achsenende weist der Magnetanker 5 den beweglichen Kontakt 4 auf, der ebenfalls mit der Achse 7 verbunden ist. Die Achse 7 kann beispielsweise mit oder aus Edelstahl gefertigt sein.

Der magnetische Kern 6 ist von einer Spule 8 umgeben. Ein von außen aufschaltbarer Stromfluss in der Spule 8 erzeugt durch eine Magnetkraft eine Bewegung des magnetischen Kerns 6 und damit des gesamten Magnetankers 5 in axialer Richtung, bis der bewegliche Kontakt 4 die feststehenden Kontakte 2, 3 kontaktiert. Der Magnetanker 5 bewegt sich somit von der Position im ersten Schaltzustand, die dem Ruhezustand, das heißt dem trennenden, also nicht-durchschaltendem Zustand, entspricht, in eine zweite Position in einem zweiten Schaltzustand der Schaltvorrichtung 100, die dem aktiven, also durchschaltenden Zustand entspricht. Im zweiten Schaltzustand, also im aktiven Zustand, sind die Kontakte 2, 3, 4 galvanisch miteinander verbunden. In einer anderen Ausführungsform kann der Magnetanker 5 alternativ auch eine Drehbewegung ausführen. Der Magnetanker 5 kann insbesondere als Zuganker oder Klappanker ausgebildet sein. Zur Führung der Achse 7 und damit des Magnetankers 5 weist die Schaltvorrichtung 100 ein Joch 9 auf, das Reineisen oder eine niedrig dotierte Eisenlegierung aufweisen oder daraus sein kann und das einen Teil des magnetischen Kreises bildet. Das Joch 9 weist eine Öffnung auf, in der die Achse 7 geführt wird. Wird der Stromfluss in der Spule 8 unterbrochen, wird der Magnetanker 5 im gezeigten Beispiel durch eine oder mehrere Federn 10 wieder in die erste Position bewegt. Die Schaltvorrichtung 100 befindet sich dann wieder im Ruhezustand, in dem die Kontakte 2, 3, 4 geöffnet sind.

Beim Öffnen der Kontakte 2, 3, 4 kann ein Lichtbogen entstehen, der die Kontaktflächen beschädigen kann. Dadurch kann die Gefahr bestehen, dass die Kontakte 2, 3, 4 durch eine durch den Lichtbogen hervorgerufene Verschweißung aneinander "kleben" bleiben und nicht mehr voneinander getrennt werden. Um die Entstehung derartiger Lichtbögen zu verhindern oder wenigstens um die Löschung von auftretenden Lichtbögen zu unterstützen, sind die Kontakte 2, 3, 4 in einer Gasatmosphäre angeordnet, so dass die Schaltvorrichtung 100 als gasgefülltes Relais oder gasgefüllter Schütz ausgebildet ist. Hierzu sind die Kontakte 2, 3, 4 innerhalb einer Schaltkammer 11, gebildet durch eine Schaltkammerwand 12 und einen Schaltkammerboden 13, in einem hermetisch abgeschlossenen Teil des Gehäuses 1 angeordnet. Das Gehäuse 1 und insbesondere der hermetisch abgeschlossene Teil des Gehäuses 1 umgibt den Magnetanker 5 und die Kontakte 2, 3, 4 vollständig. Der hermetisch abgeschlossene Teil des Gehäuses 1 und damit auch die Schaltkammer 11 sind mit einem Gas 14 gefüllt. Das Gas 14, das durch einen Gasfüllstutzen 15 im Rahmen der Herstellung der Schaltvorrichtung 100 eingefüllt werden kann, kann besonders bevorzugt Wasserstoff-haltig sein, beispielsweise mit 50% oder mehr H₂ in einem inerten Gas oder sogar mit 100% H₂, da Wasserstoff-haltiges Gas die Löschung von Lichtbögen fördern kann. Weiterhin können innerhalb oder außerhalb der Schaltkammer 11 sogenannte Blasmagnete (nicht gezeigt) vorhanden sein, also Permanentmagnete, die eine Verlängerung der Lichtbogenstrecke bewirken und somit das Löschen der Lichtbögen verbessern können. Die Schaltkammerwand 12 und der Schaltkammerboden 13 können beispielsweise mit oder aus einem Metalloxid wie etwa Al₂O₃ gefertigt sein.

In den Figuren 1A und 1B ist eine herkömmliche Federanordnung mit zwei Federn 10 gezeigt, die bei ausgeschaltetem Magnetfeld die Rückstellung der Schaltvorrichtung 100 vom zweiten Schaltzustand in den ersten Schaltzustand bewirken. Im Vergleich zur Verwendung nur einer Feder sind jedoch zusätzliche Komponenten erforderlich.

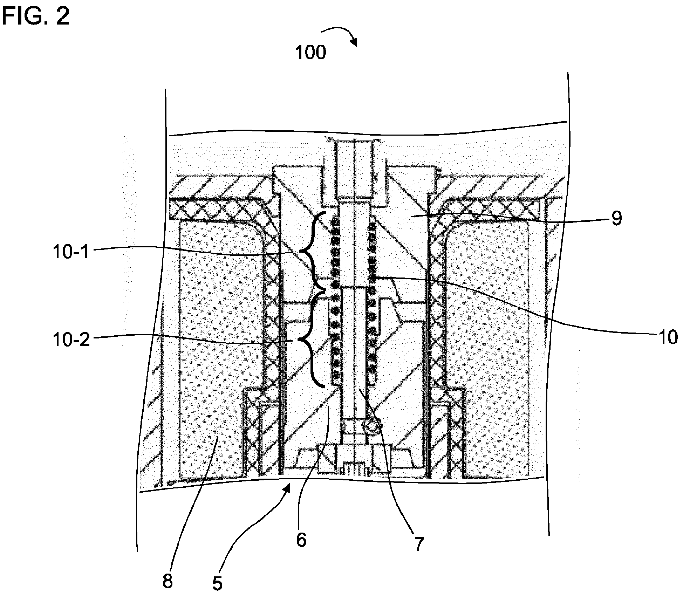

In Figur 2 ist ein Ausschnitt einer Schaltvorrichtung 100 gemäß einem erfindungsgemäßen Ausführungsbeispiel gezeigt. Komponenten und Merkmale der Schaltvorrichtung, die in Verbindung mit der Figur 2 nicht gezeigt und/oder beschrieben werden, können wie in Verbindung mit den Figuren 1A und 1B beschrieben ausgebildet sein.

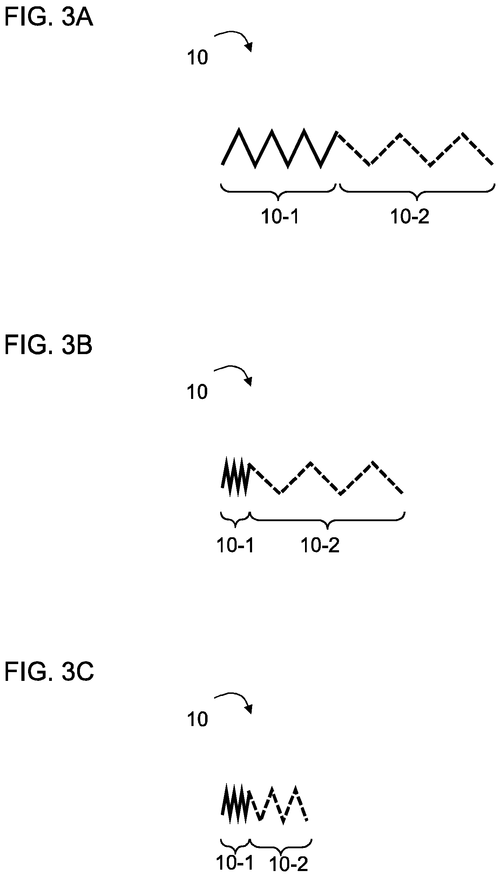

Im Vergleich zur Schaltvorrichtung 100 der Figuren 1A und 1B weist die in Figur 2 gezeigte Schaltvorrichtung 100 eine Feder 10 auf, die einen ersten Federbereich 10-1 mit einer ersten Federkonstanten und einen zweiten Federbereich 10-2 mit einer zweiten Federkonstanten aufweist. Die Federkonstanten der Federbereiche 10-1 und 10-2 sind unterschiedlich. Rein beispielhaft ist die zweite Federkonstante größer als die erste Federkonstante, so dass, in einfachen Worten, der erste Federbereich 10-1 weicher als der zweite Federbereich 10-2 ist. Die Feder 10 ist somit eine nichtlineare Feder. Der magnetische Kern 6 und das Joch 9 bilden jeweils einen Anschlag für die Feder 10, die frei, aber auch im ersten Schaltzustand unter Spannung, eingebaut ist. Beispielsweise kann die Feder 10 aus Federstahl, beispielsweise Edelstahl 1.4305, sein und entspannt eine Länge in einem Bereich größer oder gleich 7 mm und kleiner oder gleich 20 mm, beispielsweise etwa 9 mm, und einen Durchmesser im Bereich von etwa 4 mm aufweisen. Der Durchmesser der Feder 10 richtet sich auch nach dem Durchmesser der Achse 7, die durch die Wicklungen der Feder 10 wie gezeigt hindurchragt. Die Funktionsweise der Feder 10 ist in Verbindung mit den Figuren 3A bis 3C beschrieben.

In Verbindung mit den Figuren 3A bis 3C sind verschiedene Zustände der Feder 10 gezeigt, wie sie während der Schaltvorgänge der Schaltvorrichtung 100 auftreten. Die Wicklungen der Federbereiche 10-1, 10-2 sind hierbei als Zick-Zack-Linien angedeutet, die unterschiedlichen Federkonstanten sind durch die unterschiedlichen Linientypen angedeutet. Die angedeutete Anzahl der Wicklungen der Federbereiche 10-1, 10-2 ist rein beispielhaft zu verstehen. Im gezeigten Ausführungsbeispiel ist die Federkonstante des ersten Federbereichs 10-1 kleiner als die Federkonstante des zweiten Federbereichs 10-2.

Die Feder 10 wird während des durch den magnetischen Kreis bewirkten Schaltvorgangs, also beim Übergang vom ersten Schaltzustand, dem geöffneten Zustand, zum zweiten Schaltzustand, dem geschlossenen Zustand, komprimiert und kann so Energie speichern, die bei Abschalten der durch den magnetischen Kreis hervorgerufenen Kraft den beweglichen Kontakt vom zweiten Schaltzustand in den ersten Schaltzustand zurückstellen kann.

In Figur 3A ist die Feder 10 im ersten Schaltzustand gezeigt, in dem die Feder 10 unter Spannung zwischen den durch den magnetischen Kern und das Joch gebildeten Anschlägen gehalten wird. Wird an die Spule des magnetischen Kreises ein Schaltstrom angelegt, bewegt sich der Magnetanker in Richtung der feststehenden Kontakte, so dass die Feder 10 komprimiert wird. Da die Federkonstante des ersten Federbereichs 10-1 kleiner als die des zweiten Federbereichs 102 ist, wird anfangs im Wesentlichen und besonders bevorzugt ausschließlich der erste Federbereich 10-1 komprimiert. Dies erfolgt solange, bis der erste Federbereich 10-1 soweit komprimiert ist, dass sich die Federwicklungen des ersten Federbereichs 10-1 ab Erreichen eines Zwischenzustands im Verlauf einer weiteren Komprimierung der Feder 10 blockieren. Dieser Zwischenzustand ist in Figur 3B gezeigt, in dem der erste Federbereich 10-1 im Wesentlichen oder besonders bevorzugt vollständig komprimiert und somit blockiert ist. Im weiteren Verlauf der Komprimierung der Feder 10 wird ab Erreichen des Zwischenzustands bis zum Erreichen des zweiten Schaltzustands im Wesentlichen und besonders bevorzugt ausschließlich der zweite Federbereich 10-2 komprimiert. Da das bewegliche System, also im Wesentlichen der Magnetanker mit dem beweglichen Kontakt, beim Durchlaufen des Zwischenzustands bereits genügend Geschwindigkeit aufgenommen hat, ist es leicht möglich, den im Vergleich zum ersten Federbereich 10-1 höheren Widerstand des zweiten Federbereichs 10-2 zu überwinden. In Figur 3C ist die Feder 10 im zweiten Schaltzustand gezeigt, in dem auch der zweite Federbereich 10-2 komprimiert ist. Dieser kann je nach Auslegung der Feder 10 und insbesondere des Federwegs des zweiten Federbereichs 10-2 vollständig oder nur teilweise komprimiert sein.

Wird die durch den magnetischen Kreis hervorgerufene Magnetkraft abgeschaltet, kann zumindest durch den zweiten Federbereich 10-2 eine ausreichend hohe Rückstellkraft hervorgerufen werden, die das bewegliche System wieder in Richtung des ersten Schaltzustands zurückbewegt. Insbesondere kann die Ausdehnung der Feder 10 im Verlauf der Rückkehr zum ersten Schaltzustand umgekehrt zur beschriebenen Komprimierung verlaufen.

Durch die Wahl des Federmaterials sowie der Anzahl und Steigung der Wicklungen des ersten und zweiten Federbereichs 10-1, 10-2 ist möglich, die Federkonstanten und Federwege der Federbereiche 10-1, 10-2 in gewünschter Weise einzustellen, um beide Schaltrichtungen optimal bewirken zu können. Besonders bevorzugt weisen der erste und zweite Federbereich 10-1, 10-2 unterschiedliche Wicklungen auf, also beispielsweise insbesondere unterschiedlich enge Wicklungen beziehungsweise unterschiedliche Wicklungssteigungen. Hierdurch können bei der Verwendung desselben Materials für die gesamte Feder die unterschiedlichen Federkonstanten bewirkt werden. Hierbei kann es je nach gewünschten Federkonstanten und Federwegen möglich sein, dass der erste und zweite Federbereich 10-1, 10-2 beispielsweise unterschiedliche Wicklungszahlen aufweisen. Weiterhin kann es auch möglich sein, dass der erste und zweite Federbereich 10-1, 10-2 gleiche Wicklungszahlen aufweisen. Weiterhin können der erste und zweite Federbereich 10-1, 10-2 unterschiedliche Federwege aufweisen. Alternativ hierzu sind auch gleiche Federwege möglich.

Der Übergang vom ersten Federbereich 10-1 zum zweiten Federbereich 10-2 kann wie in den Figuren 3A bis 3C gezeigt abrupt sein. Die Feder 10 kann hierbei im ersten Federbereich 10-1 einen gleichbleibenden ersten Wicklungsabstand und im zweiten Federbereich 10-2 einen gleichbleibenden zweiten, vom ersten Wicklungsabstand verschiedenen Wicklungsabstand aufweisen, wobei die beiden Federbereiche 10-1, 10-2 unmittelbar aneinander angrenzen, so dass der Übergang vom ersten zum zweiten Federbereich 10-1, 10-2 abrupt ist. Alternativ hierzu kann es auch möglich sein, dass der Übergang vom ersten zum zweiten Federbereich 10-1, 10-2 kontinuierlich ist, dass also zwischen dem ersten und zweiten Federbereich 10-1, 10-2 ein Übergangsbereich vorhanden ist, in dem sich der Wicklungsabstand über mehrere Wicklungen vom ersten zum zweiten Wicklungsabstand ändert.

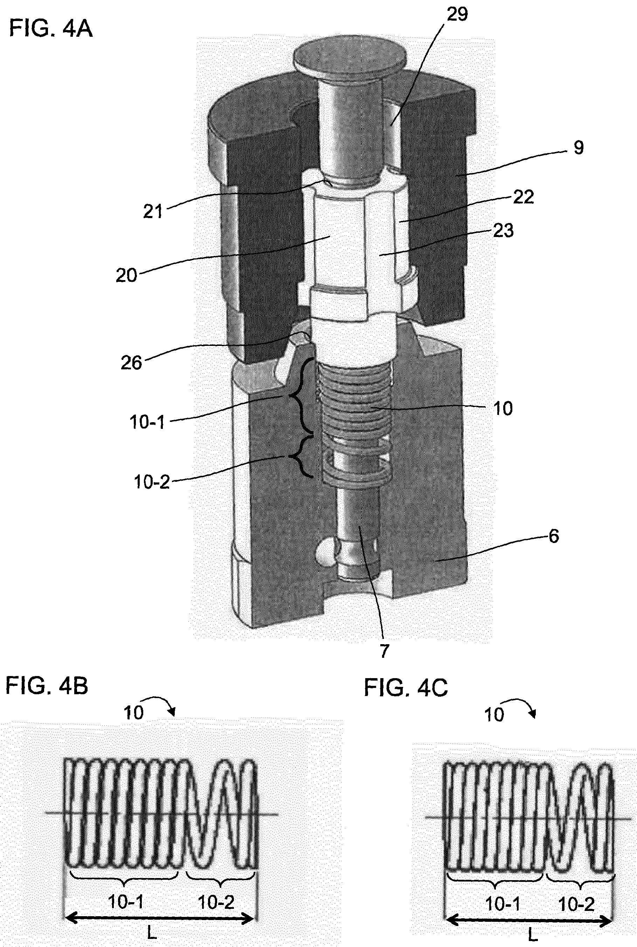

In Verbindung mit den Figuren 4A bis 4C ein weiteres Ausführungsbeispiel gezeigt, das eine Modifikation des in Figur 2 gezeigten Ausführungsbeispiels bildet. Figur 4A zeigt einen Teil der Schaltvorrichtung, während in den Figuren 4B und 4C die Feder in zwei unterschiedlichen Zuständen während eines Schaltvorgangs gezeigt ist. Hierbei können wiederum Komponenten und Merkmale der Schaltvorrichtung, die in Verbindung mit dem Ausführungsbeispiel der Figur 4A bis 4C nicht gezeigt und/oder beschrieben werden, wie in Verbindung mit den vorherigen Figuren beschrieben ausgebildet sein. Der besseren Erkennbarkeit halber sind in Figur 4A der magnetische Kern 6 und das Joch 9 aufgeschnitten dargestellt. Wie in Verbindung mit der Figur 2 beschrieben ist, ist die Feder 10 als nicht-lineare Feder mit einem ersten und einem zweiten Federbereich 10-1, 10-2 mit unterschiedlichen Federkonstanten ausgebildet.

Im Vergleich zum vorherigen Ausführungsbeispiel, bei dem die Achse 7 direkt durch das Joch 9 geführt wird, weist das Joch 9 im Ausführungsbeispiel der Figuren 4A bis 4C eine Öffnung 29 auf, in der eine Laufbuchse 20 angeordnet ist. Die Laufbuchse 20 weist einen reibungsarmen, wasserstoffverträglichen Kunststoff auf, insbesondere PE, Glas-gefülltes PBT und/oder bevorzugt PEEK. Besonders bevorzugt ist die Laufbuchse 20 aus PEEK gebildet, das mit einer Schmelztemperatur von 335°C mit Vorteil in Bezug auf die üblicherweise in gasgefüllten Schützen auftretenden Temperaturen hochtemperaturfest ist. Die im Folgenden beschriebene Ausformung der Laufbuchse 20 kann durch ein Fertigungsverfahren wie beispielsweise Spritzguss hergestellt werden.

Zur Führung der Achse 7 weist die Laufbuchse 20 eine Führungsöffnung 21 auf, die insbesondere zylindrisch ausgebildet ist und in der die Achse 7 angeordnet ist, so dass die Achse 7 in der Führungsöffnung 21 durch die Laufbuchse 20 hindurchragt. Die Führungsöffnung 21 und die Achse 7 weisen bevorzugt eine sehr enge Passung auf, um eine genaue Führung der Achse 7 zu ermöglichen. Die Führungsöffnung 21 weist somit einen Durchmesser auf, der nur sehr wenig größer als der Durchmesser der Achse 7 ist. Wie leicht zu erkennen ist, wird die Achse 7 berührungsfrei zum Joch 9 in der Laufbuchse 20 geführt. Durch den nicht vorhandenen Kontakt zwischen Achse 7 und Joch 9 kann ein Abrieb zwischen der Achse 7 und dem Joch 9 verhindert werden, der aufgrund der verwendeten Materialien für die Achse 7 und das Joch 9 mit zunehmender Anzahl von Schaltvorgängen auftreten könnte.

Die Laufbuchse 20 ist in der Öffnung 29 des Jochs 9 durch eine Presspassung befestigt, wobei wie gezeigt die Laufbuchse 20 nicht die gesamte Öffnung 29 des Jochs 9 ausfüllen muss. Hierzu weist die Laufbuchse 20 eine Außenfläche 22 auf, die zumindest teilweise mit der Innenwand der Öffnung 29 des Jochs 9 in Berührung steht. Durch die Presspassung ist die Laufbuchse 20 in der Öffnung 29 des Jochs 9 unabhängig von der Bewegung der Achse 7 fixiert.

Die Laufbuchse 20 kann mit der gesamten Außenfläche 22 und/oder über den gesamten Umfang an der Innenfläche der Öffnung 29 des Jochs 9 anliegen. Es kann aber vorteilhafter sein, wenn, wie in Figur 4A gezeigt ist, in der Außenfläche 22 zumindest ein Kanal 23 ausgebildet ist. Besonders bevorzugt kann der zumindest eine Kanal 23 parallel zur Achse 7 verlaufen. Der zumindest eine Kanal 23 verläuft bevorzugt von einer dem beweglichen Kontakt abgewandten Seite zu einer dem beweglichen Kontakt zugewandten Seite der Laufbuchse 20 und bildet einen durch die Öffnung 29 des Jochs 9 reichenden Zwischenraum zwischen der Innenwand der Öffnung 29 und der Außenfläche 22 der Laufbuchse 20, der einen Gasaustausch durch die Öffnung 29 des Jochs 9 ermöglicht. Bei einer Bewegung des Magnetankers während eines Schaltvorgangs der Schaltvorrichtung kann somit Gas durch einen solchen Kanal 23 strömen und somit der Bewegung der beweglichen Teile folgen, so dass sich kein Über- oder Unterdruck in einem Teilbereich im Gasvolumen bilden kann, der zu einer Verzögerung des Schaltvorgangs führen könnte.

Im gezeigten Ausführungsbeispiel weist die Laufbuchse 20 eine Mehrzahl von Kanälen 23 in der Außenfläche 22 auf. Rein beispielhaft sind vier Kanäle 23 gezeigt, es können aber auch mehr oder weniger Kanäle vorhanden sein. Die Kanäle 23 sind wie gezeigt bevorzugt in regelmäßigen Abständen auf der Außenfläche 22 der Laufbuchse 20 um die Führungsöffnung 21 und somit um die Achse 7 herum angeordnet und verlaufen alle parallel zur Achse 7. Zwischen den Kanälen 23 sorgt die in Berührung mit der Innenwand der Öffnung 29 des Jochs 9 stehende Außenfläche 22 der Laufbuchse 20 wie vorab beschrieben für eine Presspassung und somit für eine Fixierung der Laufbuchse 20 in der Öffnung 29 des Jochs 9.

Wie in Figur 4A weiter gezeigt ist, kann die Laufbuchse 20 in zumindest einem Schaltzustand der Schaltvorrichtung und bevorzugt dauerhaft in die Öffnung 26 im magnetischen Kern 6 ragen, in der die Achse 7 befestigt ist. Insbesondere kann die Laufbuchse 20 auch einen Anschlag für die Feder 10 bilden, während wie im vorherigen Ausführungsbeispiel der magnetische Kern 6 den anderen Anschlag für die Feder 10 bildet.

In Figur 4B ist die Feder 10 im ersten Schaltzustand, also im Ruhezustand der Schaltvorrichtung, gezeigt. Die Gesamtlänge L der Feder 10 beträgt hierbei im entspannten Zustand etwa 9 mm bei einem Durchmesser von etwa 4 mm und im eingebauten Zustand im ersten Schaltzustand rein beispielhaft 8,1 mm. Der erste Federbereich 10-1 weist im gezeigten Ausführungsbeispiel 8 Wicklungen und einen Federweg von 1 mm auf. Der zweite Federbereich 10-2 weist zwei Wicklungen und einen Federweg von mehreren Millimetern auf. In Figur 4C ist die Feder 10 im der Figur 3B entsprechenden Zwischenzustand gezeigt, in dem der erste Federbereich 10-1 vollständig komprimiert ist, so dass sich die Windungen des ersten Federbereichs 10-1 blockieren. Die Feder 10 weist in diesem Zustand gemäß dem vorliegenden Ausführungsbeispiel eine Länge L von 7,1 mm auf. Bei der weiteren Komprimierung der Feder 10 zur Erreichung des zweiten Schaltzustands wird, wie in Verbindung mit den Figuren 3A bis 3C beschrieben ist, nur noch der zweite Federbereich 10-2 mit der größeren Federkonstanten komprimiert.

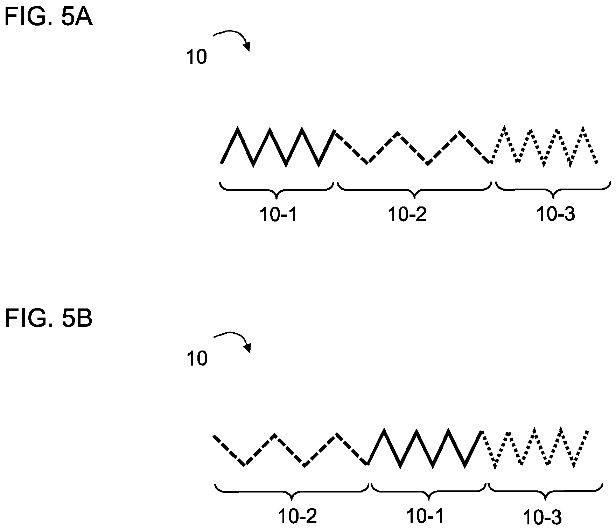

Alternativ zu den gezeigten Ausführungsbeispielen mit einer Feder 10 mit zwei Federbereichen 10-1, 10-2 kann die Feder 10 auch mehr als zwei Federbereiche aufweise. Beispielsweise kann es möglich sein, dass die Feder 10, wie in den Figuren 5A und 5B angedeutet ist, zumindest einen dritten Federbereich 10-3 mit einer dritten Federkonstanten aufweist, die größer als die zweite Federkonstante des zweiten Federbereichs 10-2 ist. Für die Ausbildung und das Verhalten des dritten Federbereichs 10-3 im Verhältnis zum zweiten Federbereich 10-2 kann dasselbe gelten wie vorab für den ersten und zweiten Federbereich 10-1, 10-2 beschrieben. Der zweite Federbereich 10-2- kann beispielsweise zwischen dem ersten Federbereich 10-1 und dem dritten Federbereich 10-3 angeordnet sein, wie in Figur 5A gezeigt ist. Weiterhin kann es auch möglich sein, dass der erste Federbereich 10-1 zwischen dem zweiten und dritten Federbereich 10-2, 10-3 angeordnet ist, wie in Figur 5B gezeigt ist. Darüber hinaus können auch mehr als drei Federbereiche mit unterschiedlichen Federkonstanten vorhanden sein.

Die in den in Verbindung mit den Figuren beschriebenen Merkmale und Ausführungsbeispiele können gemäß weiteren Ausführungsbeispielen miteinander kombiniert werden, auch wenn nicht alle Kombinationen explizit beschrieben sind. Weiterhin können die in Verbindung mit den Figuren beschriebenen Ausführungsbeispiele alternativ oder zusätzlich weitere Merkmale gemäß der Beschreibung im allgemeinen Teil aufweisen.

Die Erfindung ist nicht durch die Beschreibung anhand der Ausführungsbeispiele auf diese beschränkt.

### Bezugszeichenliste

- 1: Gehäuse
- 2, 3: feststehender Kontakt
- 4: beweglicher Kontakt
- 5: Magnetanker
- 6: magnetischer Kern
- 7: Achse
- 8: Spule
- 9: Joch
- 10: Feder
- 10-1, 10-2, 10-3: Federbereich
- 11: Schaltkammer
- 12: Schaltkammerwand
- 13: Schaltkammerboden
- 14: Gas
- 15: Gasfüllstutzen
- 20: Laufbuchse
- 21: Führungsöffnung
- 22: Außenfläche
- 23: Kanal
- 26: Öffnung des magnetischen Kerns
- 29: Öffnung des Jochs
- 100: Schaltvorrichtung
- L: Länge

## Patentansprüche

1. Schaltvorrichtung (100), aufweisend zumindest einen feststehenden Kontakt (2, 3) und einen beweglichen Kontakt (4), wobei
der bewegliche Kontakt (4) mittels eines Magnetankers (5) von einem ersten in einen zweiten Schaltzustand bewegbar ist,
der Magnetanker (5) eine Feder (10) aufweist, die dazu eingerichtet ist, den beweglichen Kontakt (4) vom zweiten Schaltzustand in den ersten Schaltzustand zurückzustellen, **dadurch gekennzeichnet, dass**
die Feder (10) einen ersten Federbereich (10-1) mit einer ersten Federkonstanten und einen zweiten Federbereich (10-2) mit einer zweiten Federkonstanten aufweist, die größer als die erste Federkonstante ist, und
bei einem Übergang vom ersten Schaltzustand in einen Zwischenzustand ausschließlich der erste Federbereich (10-1) komprimiert wird.

2. Schaltvorrichtung (100) nach Anspruch 1, wobei der erste Federbereich (10-1) während eines Übergangs vom Zwischenzustand in den zweiten Schaltzustand blockiert ist.

3. Schaltvorrichtung (100) nach einem der vorherigen Ansprüche, wobei bei einem Übergang von einem Zwischenzustand in den zweiten Schaltzustand der zweite Federbereich (10-2) komprimiert wird.

4. Schaltvorrichtung (100) nach einem der vorherigen Ansprüche, wobei bei einem Übergang von einem Zwischenzustand in den zweiten Schaltzustand ausschließlich der zweite Federbereich (10-2) komprimiert wird.

5. Schaltvorrichtung (100) nach einem der vorherigen Ansprüche, wobei der erste und zweite Federbereich (10-1, 10-2) unterschiedliche Wicklungssteigungen aufweisen.

6. Schaltvorrichtung (100) nach einem der vorherigen Ansprüche, wobei der erste und zweite Federbereich (10-1, 10-2) unterschiedliche Wicklungszahlen aufweisen.

7. Schaltvorrichtung (100) nach einem der vorherigen Ansprüche, wobei der erste und zweite Federbereich (10-1, 10-2) unterschiedliche Federwege aufweisen.

8. Schaltvorrichtung (100) nach einem der vorherigen Ansprüche, wobei die Feder (10) zumindest einen dritten Federbereich (10-3) mit einer dritten Federkonstanten aufweist, die größer als die zweite Federkonstante ist.

9. Schaltvorrichtung (100) nach einem der vorherigen Ansprüche, wobei der Magnetanker (5) eine Achse (7) aufweist und die Achse (7) durch die Feder (10) hindurchragt.

10. Schaltvorrichtung (100) nach dem vorherigen Anspruch, wobei die Achse (7) durch eine Öffnung (29) in einem Joch (9), das Teil eines magnetischen Kreises ist, hindurchragt und in der Öffnung (29) des Jochs (9) eine Laufbuchse (20) aus einem Kunststoff zur Führung der Achse (7) angeordnet ist.

11. Schaltvorrichtung (100) nach dem vorherigen Anspruch, wobei die Laufbuchse (20) einen Anschlag für die Feder (10) bildet.

12. Schaltvorrichtung (100) nach einem der vorherigen Ansprüche, wobei die Kontakte (2, 3, 4) in einer Schaltkammer (11) mit einem Gas (14) angeordnet sind, das H₂ enthält.

13. Schaltvorrichtung (100) nach dem vorherigen Anspruch, wobei das Gas einen Anteil von zumindest 50% H₂ aufweist.

## Claims

1. Switching device (100), having at least one stationary contact (2, 3) and a moving contact (4), wherein
the moving contact (4) can be moved from a first switching state to a second switching state by means of a magnet armature (5),
the magnet armature (5) has a spring (10) which is configured to reset the moving contact (4) from the second switching state to the first switching state, **characterized in that**
the spring (10) has a first spring region (10-1) with a first spring constant and a second spring region (10-2) with a second spring constant which is greater than the first spring constant, and
only the first spring region (10-1) is compressed when a changeover is made from the first switching state to an intermediate state.

2. Switching device (100) according to Claim 1, wherein the first spring region (10-1) is blocked during a changeover from the intermediate state to the second switching state.

3. Switching device (100) according to one of the preceding claims, wherein the second spring region (10-2) is compressed when a changeover is made from an intermediate state to the second switching state.

4. Switching device (100) according to one of the preceding claims, wherein only the second spring region (10-2) is compressed when a changeover is made from an intermediate state to the second switching state.

5. Switching device (100) according to one of the preceding claims, wherein the first spring region (10-1) and the second spring region (10-2) have different winding pitches.

6. Switching device (100) according to one of the preceding claims, wherein the first spring region (10-1) and the second spring region (10-2) have different numbers of windings.

7. Switching device (100) according to one of the preceding claims, wherein the first spring region (10-1) and the second spring region (10-2) have different spring travels.

8. Switching device (100) according to one of the preceding claims, wherein the spring (10) has at least one third spring region (10-3) with a third spring constant which is greater than the second spring constant.

9. Switching device (100) according to one of the preceding claims, wherein the magnet armature (5) has a shaft (7) and the shaft (7) projects through the spring (10).

10. Switching device (100) according to the preceding claim, wherein the shaft (7) projects through an opening (29) in a yoke (9), which is part of a magnetic circuit, and a liner (20) composed of a plastic is arranged in the opening (29) of the yoke (9) for guiding the shaft (7).

11. Switching device (100) according to the preceding claim, wherein the liner (20) forms a stop for the spring (10).

12. Switching device (100) according to one of the preceding claims, wherein the contacts (2, 3, 4) are arranged in a switching chamber (11) containing a gas (14) which contains H₂.

13. Switching device (100) according to the preceding claim, wherein the gas has an H₂ content of at least 50%.

## Revendications

1. Dispositif de commutation (100) comprenant au moins un contact fixe (2, 3) et un contact mobile (4), dans lequel
le contact mobile (4) est apte à être déplacé d'un premier état de commutation à un deuxième état de commutation au moyen d'un induit magnétique (5),
l'induit magnétique (5) présente un ressort (10) qui est conçu pour ramener le contact mobile (4) du deuxième état de commutation au premier état de commutation, **caractérisé en ce que**
le ressort (10) présente une première zone de ressort (10-1) avec une première constante de rappel et une deuxième zone de ressort (10-2) avec une deuxième constante de rappel qui est supérieure à la première constante de rappel, et
lors d'un passage du premier état de commutation à un état intermédiaire, seule la première zone de ressort (10-1) est comprimée.

2. Dispositif de commutation (100) selon la revendication 1, dans lequel la première zone de ressort (10-1) est bloquée pendant un passage de l'état intermédiaire au deuxième état de commutation.

3. Dispositif de commutation (100) selon l'une des revendications précédentes, dans lequel la deuxième zone de ressort (10-2) est comprimée lors d'un passage d'un état intermédiaire au deuxième état de commutation.

4. Dispositif de commutation (100) selon l'une des revendications précédentes, dans lequel seule la deuxième zone de ressort (10-2) est comprimée lors du passage d'un état intermédiaire au deuxième état de commutation.

5. Dispositif de commutation (100) selon l'une des revendications précédentes, dans lequel les première et deuxième zones de ressort (10-1, 10-2) présentent des pas d'enroulement différents.

6. Dispositif de commutation (100) selon l'une des revendications précédentes, dans lequel les première et deuxième zones de ressort (10-1, 10-2) présentent des nombres d'enroulements différents.

7. Dispositif de commutation (100) selon l'une des revendications précédentes, dans lequel les première et deuxième zones de ressort (10-1, 10-2) présentent des courses de ressort différentes.

8. Dispositif de commutation (100) selon l'une des revendications précédentes, dans lequel le ressort (10) présente au moins une troisième zone de ressort (10-3) avec une troisième constante de rappel supérieure à la deuxième constante de rappel.

9. Dispositif de commutation (100) selon l'une des revendications précédentes, dans lequel l'induit mobile (5) présente un axe (7) et l'axe (7) traverse le ressort (10).

10. Dispositif de commutation (100) selon la revendication précédente, dans lequel l'axe (7) traverse une ouverture (29) dans une culasse (9) qui fait partie d'un circuit magnétique, et une douille (20) en matière plastique est agencée dans l'ouverture (29) de la culasse (9) pour guider l'axe (7).

11. Dispositif de commutation (100) selon la revendication précédente, dans lequel la douille de guidage (20) forme une butée pour le ressort (10).

12. Dispositif de commutation (100) selon l'une des revendications précédentes, dans lequel les contacts (2, 3, 4) sont agencés dans une chambre de commutation (11) contenant un gaz (14) qui contient du H₂.

13. Dispositif de commutation (100) selon la revendication précédente, dans lequel le gaz contient au moins 50% de H₂.
